# EUROPEAN PATENT SPECIFICATION

(11) **EP 3 712 480 B1**
(45) Date of publication and mention of the grant of the patent: **26.07.2023**
(21) Application number: 20164721.1
(22) Date of filing: 20.03.2020
(51) Int. Cl.: F16L 5/10, F16L 5/14

(54) **INSTALLATION STRUCTURE FOR PIPE BUNDLES AND USE OF SUCH AN INSTALLATION STRUCTURE**
INSTALLATIONSSTRUKTUR FÜR ROHRBÜNDEL UND VERWENDUNG EINER SOLCHEN INSTALLATIONSSTRUKTUR
STRUCTURE D'INSTALLATION POUR FAISCEAUX DE TUYAUX ET UTILISATION D'UNE TELLE STRUCTURE D'INSTALLATION

(30) Priority: 22.03.2019 IT 201900004209
(43) Date of publication of application: 23.09.2020
(73) Proprietor: Valsir S.p.A. A Socio Unico, 25078 Vestone (BS) (IT)
(72) Inventor: PICCINELLI, Gianmario, 25078 VESTONE (BS) (IT); OMICCIOLI, Demis, 25078 VESTONE (BS) (IT)
(74) Representative: Cernuzzi, Daniele

(56) References cited:
- CH-A5- 692 793
- DE-A1- 10 047 715
- DE-A1-102014 016 891
- JP-A- H09 229 268
- NO-B1- 339 687
- US-A- 6 053 456

## Description

### PRIORITY CLAIM

This application claims priority from Italian Patent Application No. 102019000004209 filed on 22/03/2019.

### TECHNICAL FIELD

The present invention relates to an installation structure for pipe bundles.

### BACKGROUND ART

In construction jargon, a pipe bundle is a bundle or battery of pipes, typically made of PVC, PP or other polymer material, used mainly for the passage of cables (electrical cables, optical fibers, etc.) that power and/or serve constructions and buildings in general.

The pipes of the pipe bundle are normally buried or incorporated in cast concrete or other construction material and have ends that lead to an inspection chamber, which serves precisely for the inspection of the cables housed in the pipes.

In general, therefore, the pipe bundle is placed through parts of a building structure, typically walls.

According to the current common construction techniques, when it is necessary to arrange a pipe bundle through a wall, suitable passages are made for each pipe of the pipe bundle in a formwork shaped for making the inspection chamber and precisely the wall through which the pipe bundle passes.

This system is laborious and not very efficient, in particular requiring the preparation of each single passage and the adequate sealing thereof, in order to avoid the entry of water into the chamber under construction.

NO339687B1 discloses a sealing gasket for use in connection with the passage of pipes through an opening in a wall. The sealing gasket is configured so that it is possible to insert several pipes in a tight manner through said sealing gasket.

### DISCLOSURE OF INVENTION

The present invention aims to overcome the drawbacks highlighted herein of the prior art; in particular, the invention has the purpose of allowing the installation of a pipe bundle, i.e. a battery of pipes, through a wall under construction in a particularly simple, fast and efficient way.

The present invention therefore relates to a multi-passage installation structure for pipe bundles (i.e., a multi-passage installation structure for service cables and/or pipes through a wall) as defined in essential terms in the appended Claim 1 and, in the additional features thereof, in the dependent claims.

Preferred additional features of the invention are indicated in the dependent claims.

The invention provides an installation structure for pipe bundles, i.e. a multi-passage installation structure for service cables and/ or pipes through a wall, which allows the installation of a pipe bundle, i.e. a battery of pipes or cables, through a wall under construction in a particularly simple, fast and efficient way, avoiding the entry of water through the wall.

### BRIEF DESCRIPTION OF THE DRAWINGS

Further features and advantages of the present invention will become apparent from the following description of a non-limiting embodiment example, with reference to the figures of the accompanying drawings, wherein:
- Figure 1 is an exploded perspective view of an installation structure for pipe bundles according to the invention;
- Figure 2 is an assembled perspective view, with parts removed for clarity, of the installation structure of Figure 1;
- Figure 3 is a perspective view of a component of the installation structure of Figure 1;
- Figure 4 is a longitudinal section view of a further component of the installation structure of Figure 1;
- Figure 5 is an enlarged view of a detail of the component of Figure 3;
- Figures 6A-6E are schematic longitudinal section views of the installation structure of the invention, where the installation structure is shown in different configurations of use.

### BEST MODE FOR CARRYING OUT THE INVENTION

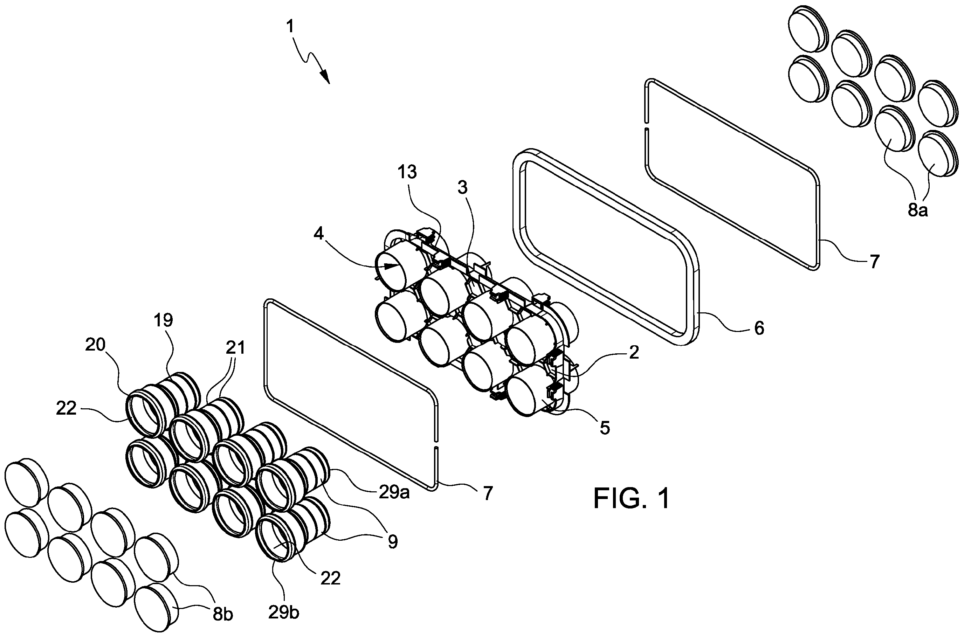

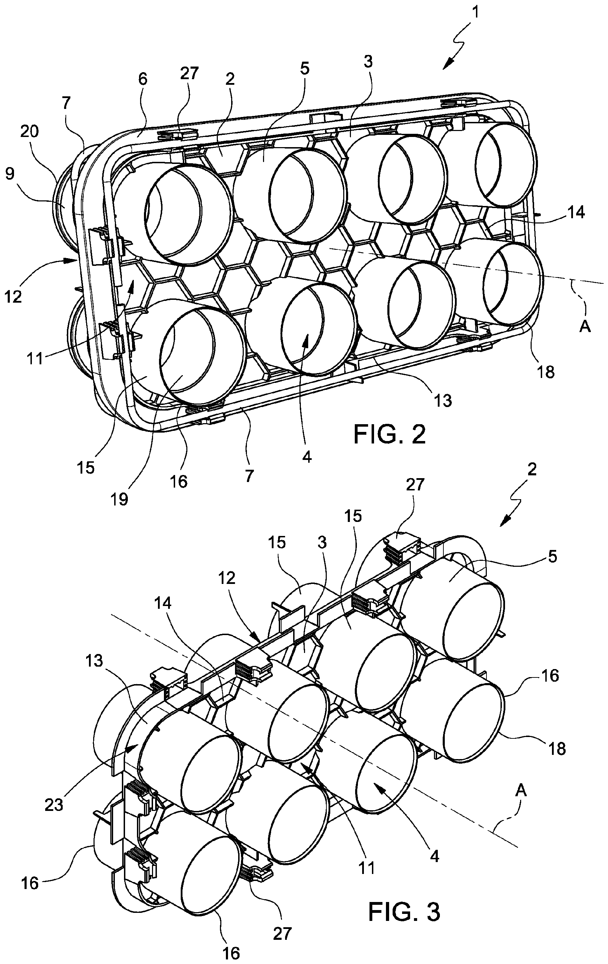

In Figures 1 and 2, reference numeral 1 indicates an installation structure for a pipe bundle in its whole.

The structure 1 mainly comprises a mask 2, having a plate body 3 provided with a plurality of through openings 4 associated to respective sleeves 5 which project from the plate body 3; and a peripheral gasket 6 arranged about the plate body 3; and optionally a pair of framework elements 7; caps 8a, 8b; and extension pipes 9.

The mask 2 preferably consists of a polymer material monolithic piece, for example made of PVC, PP or other, formed by the plate body 3 and the sleeves 5.

The plate body 3 can have different shapes, for example a substantially polygonal shape possibly with rounded corners; in the non-limiting example illustrated, but not necessarily, the plate body 3 is substantially rectangular with rounded corners.

With reference also to Figure 3, the plate body 3 is substantially flat and extends between two opposite faces 11, 12 along an axis A, substantially perpendicular to the faces 11, 12, and has an outer peripheral edge 13 which extends around the axis A.

In the illustrated example (but not necessarily), the faces 11, 12 are substantially flat and parallel and have stiffening ribs 14 projecting from the faces 11, 12 and define for example (but not necessarily) a honeycomb pattern.

The openings 4, for example circular and all equal to each other (i.e. having the same diameter), are formed passing through the plate body 3 between the faces 11, 12.

In the example shown, the openings 4 are arranged side by side along two parallel rows, but it is understood that the openings 4 can be variously arranged on the plate body 3, in various numbers and organized according to different schemes.

The sleeves 5, for example cylindrical (having a circular cross section), extend along respective longitudinal axes parallel to each other and to the axis A and are arranged through the plate body 3 and project from each face 11, 12. In particular, each sleeve 5 has two collar portions 15 which project from respective opposite faces 11, 12 of the plate body 3 around the respective opening 4 formed in the plate body 3.

Each sleeve 5 has two open opposite longitudinal ends 16, delimited by respective front edges 18.

In the illustrated example, the sleeves 5 are cylindrical, i.e. they have a circular cross section, and they all have the same dimensions (same diameter and same length).

It is understood that the sleeves 5, as well as the respective openings 4, can have shapes and/or dimensions that differ between each other.

Optionally, the sleeves 5 are associated to respective extension pipes 9, housed in the sleeves 5 and projecting from one or both of the ends 16 of the sleeves 5.

In the example shown, each extension pipe 9 comprises an insertion portion 19, having a diameter (cross section) such to be insertable in a sleeve 5; and a socket head portion 20, having a diameter (cross section) greater than the insertion portion 19 and such to axially abut against a front edge 18 to one of the ends 16 of a sleeve 5, so as to project outside the sleeve 5 when the respective insertion portion 19 is instead housed in the sleeve 5. Furthermore, the head portion 20 is sized so as to receive an end of a service pipe of the pipe bundle.

The extension pipes 9, in particular the respective insertion portions 19, can have different lengths.

Depending on the length of the insertion portion 19, the latter can completely cross the sleeve 5 in which it is inserted and come out of the end opposite to that from which the head portion 20 of the same extension pipe 9 projects. In this case, the extension pipe 9 therefore projects from both ends 16 of the sleeve 5 in which it is inserted.

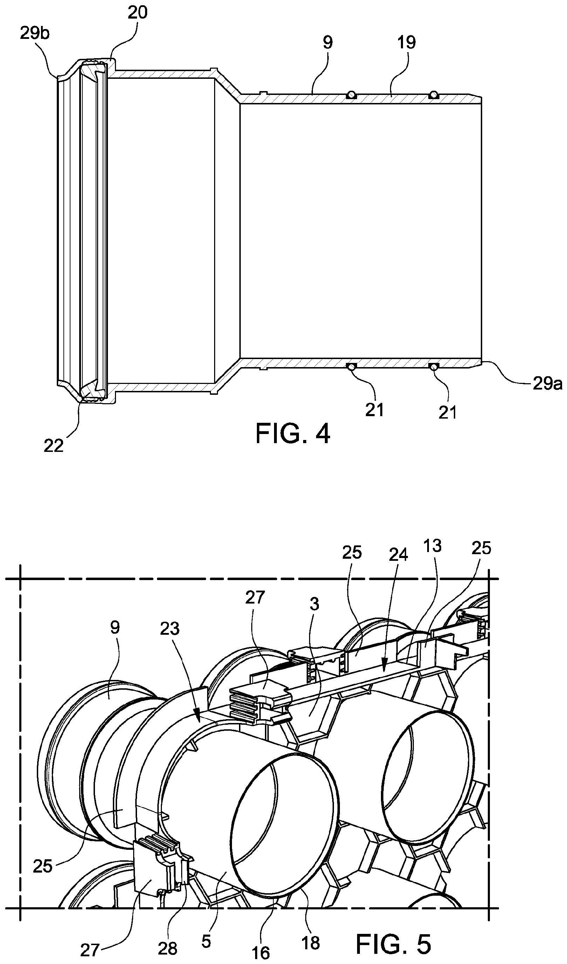

Preferably, as shown in greater detail in Figure 4, the extension pipes 9 and in particular the insertion portions 19 thereof are provided with outer sealing rings 21, cooperating radially with respective inner surfaces of the sleeves 5 to ensure the hydraulic seal inside the sleeves 5. For example, the sealing rings 21 (in particular of the O-ring type) are housed in respective annular seats (grooves), formed on the outer lateral surfaces of the insertion portions 19, and project radially from the respective seats so as to contact the inner surfaces of the sleeves 5; each extension pipe 9 can have several sealing rings 21 longitudinally spaced from each another along the insertion portion 19.

Furthermore, the extension pipes 9 are preferably provided also with respective inner sealing rings 22, located inside each extension pipe 9 and precisely inside the respective head portion 20. Each extension pipe 9 has a sealing ring 22, housed in a groove formed on an inner lateral surface of the head portion 20 (in Figure 4, the sealing ring 22 is represented in undeformed conditions); the sealing ring 22 has at least one radial sealing lip which projects radially inward to cooperate radially, in use, with an outer lateral surface of a service pipe of the pipe bundle (not shown) housed in the extension pipe 9 and in particular in the head portion 20 (which therefore has the function of connection with the service pipes of the pipe bundle). In this way, the extension pipes 9 ensure with the respective sealing rings 22 the hydraulic seal on the service pipes of the pipe bundle served by the structure 1.

The gasket 6 is arranged along the peripheral edge 13 of the plate body 3, in particular in a seat 23 formed along the peripheral edge 13.

With reference also to the enlarged detail of Figure 5, the seat 23 has a bottom surface 24, consisting of a radially outer surface of the peripheral edge 13, and of the lateral restraint elements 25, which project outwards from the peripheral edge 13 on opposite sides of the bottom surface 24 and substantially perpendicular to the axis A.

The elements 25 on each side of the bottom surface 24 are spaced from each other along the peripheral edge 13.

Preferably (but not necessarily) the elements 25 arranged on one side of the bottom surface 24 are at least partially peripherally staggered (i.e. along the peripheral edge 13) with respect to the elements 25 arranged on the opposite side.

The gasket 6 consists of a loop-shaped band, for example having a substantially quadrangular (rectangular or square) cross section, and made of a swellable material, for example a bitumen material, which expands in contact with water.

The gasket 6 is housed in the seat 23 and leans on the bottom surface 24 and, laterally, against the opposite elements 25.

The framework elements 7 are arranged substantially around the sleeves 5 on opposite sides of the gasket 6.

The framework elements 7 are for example defined by respective bars or rods, for example metal, folded along the peripheral edge 13 of the plate body 3 around the axis A following the profile (the shape) of the peripheral edge 13.

Each framework element 7 is supported by a plurality of supports 27 which project from the plate body 3 and are spaced along the peripheral edge 13. The supports 27 are provided with hooks 28, for example snap hooks, which engage the framework elements 7 and keep the framework elements 7 spaced from the gasket 6 and from the faces 11, 12 of the plate body 3, as well as from the sleeves 5 around which they are arranged.

The caps 8a are shaped so as to close respective ends 16 of the sleeves 5, or respective ends 29a of the extension pipes 9, in particular of the insertion portions 19; advantageously, the caps 8a are shaped and sized so as to alternatively close one end 16 of a sleeve 5 or one end 29a of an extension pipe, since the cap 8a can be inserted inside the sleeve 5 or (turned back to front) fitted outside the end 29a of the extension pipe 9.

Further caps 8b are instead shaped so as to close respective ends 29b of the head portions 20 of the extension pipes 9 (being in particular insertable therein). Advantageously, the caps 8b close the head portions 20 fluid-tightly by cooperating with the respective inner sealing rings 22.

In use, when in a construction site an inspection chamber or, more in general, a wall through which a pipe bundle is arranged (i.e. a battery of service pipes, inside which service cables of various kinds are then passed) are constructed, the structure 1 is positioned, individually or in battery (several structures side by side horizontally and/or vertically) inside a formwork or framework arranged for the construction of the chamber to be built, for example, in concrete.

In particular, the structure 1, with the sleeves 5 closed by the caps 8a, is inserted in the framework of the formwork, wherein a concrete casting is then made.

If necessary, the extension pipes 9 are inserted in the sleeves 5, closed by the respective caps 8a, 8b.

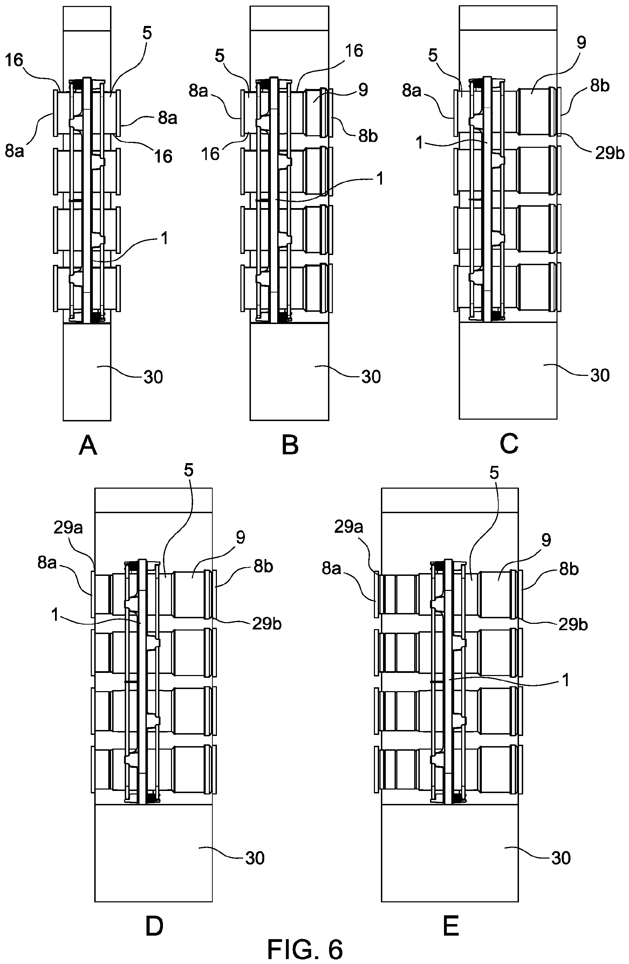

As schematically shown in Figures 6A-6E, the extension pipes 9, selected of the appropriate length, are inserted in the sleeves 5 if the wall 30 under construction has a thickness greater than the minimum guaranteed by the use of the mask 2 alone (i.e. greater than the length of the sleeves 5 closed by the caps 8a).

In a basic configuration, shown in Figure 6A, in fact, if the wall 30 under construction (through which the pipe bundle has to pass) has a thickness substantially equal to the length of the sleeves 5, the structure 1 can be installed (i.e. incorporated into the wall) without extension pipes 9. In this case, both the ends 16 of the sleeves 5 are closed with the caps 8a. Once the wall has been built and the relative framework has been removed, the extension pipes 9 (for example of the minimum available length) are inserted in the sleeves 5 which are designed to receive service pipes and cables (leaving instead the other sleeves 5, which are not used for the pipe bundle, closed by the caps 8a); furthermore, the extension pipes 9 ensure the connection and the hydraulic seal with the service pipes of the pipe bundle, which are inserted in the respective head portions 20 of the extension pipes.

If the wall 30 to be built has a thickness greater than the length of the sleeves 5 (Figures 6B-6E), the extension pipes 9, of the length necessary to cover the entire thickness of the wall 30 under construction, are inserted in the sleeves 5.

In order to cover certain wall thicknesses, it can be sufficient to use extension pipes 9 which do not pass through the sleeves 5, that is, they project from one end 16 only of the sleeves 5 (Figures 6B, 6C); the ends 16 of the sleeves 5 are closed by the caps 8a, the ends 29b of the extension pipes are closed by the caps 8b.

For larger wall thicknesses, extension pipes 9 are used which project from both the ends 16 of the sleeves 5 (Figures 6D, 6E); the opposite ends 29a, 29b of the extension pipes 9 are closed by the caps 8a, 8b.

In this way, the entry of water inside the chamber is prevented. In fact, the gasket 6 ensures the hydraulic seal between the structure 1 and the construction material (concrete), since the material of the gasket 6 expands in contact with water, sealing the peripheral edge 13 of the plate body 3 and avoiding the entry of water in the chamber.

Subsequently, the caps 8a, 8b are removed and the sleeves 5 (possibly associated with the extension pipes 9) with the respective openings 3 remain available, in use, to receive various types of service pipes and cables, thus defining, in use, passages for service cables. Clearly, where there is no passing of cables, some of the caps 8a, 8b can be left so as to close the respective sleeves 5 or extension pipes 9. In fact, the structure 1 is also characterized by a high versatility, allowing in particular the arrangement and use of only the passages that are needed among all those potentially made available by the mask 2.

Finally, it is understood that further modifications and variations can be made to the installation structure described and illustrated herein without departing from the scope of the appended claims.

## Claims

1. A multi-passage installation structure (1) for pipe bundles, i.e. a multi-passage installation structure for service cables and/or pipes through a wall, comprising a mask (2), having a plate body (3) provided with a plurality of through openings (4) between two opposite faces (11, 12) of the plate body (3) and associated to respective sleeves (5) which project from the plate body (3) and define, in use, respective passages for service cables; and a peripheral gasket (6) arranged about the plate body (3) along an outer peripheral edge (13) of the plate body (3); **characterized in that** the gasket (6) is housed in a seat (23) formed along the peripheral edge (13) and leans against a bottom surface (24), defined by a radially outer surface of the peripheral edge (13), and, laterally, against opposite lateral restraint elements (25), which project outwards from the peripheral edge (13) on opposite sides of the bottom surface (24) .

2. A structure according to Claim 1, wherein the sleeves (5) project from both opposite faces (11, 12) of the plate body (3).

3. A structure according to Claim 1 or 2, wherein the mask (2) consists of a polymer material monolithic piece formed by the plate body (3) and the sleeves (5).

4. A structure according to one of the preceding claims, wherein the gasket (6) comprises a loop-shaped band made of a swellable material, for example a bitumen material, that expands by contact with water.

5. A structure according to one of the preceding claims, wherein the elements (25) on each side of the bottom surface (24) are spaced apart from one another along the peripheral edge (13); and the elements (25) positioned on one side of the bottom surface (24) are at least partly staggered along the peripheral edge (13) with respect to the elements (25) on the opposite side.

6. A structure according to one of the preceding claims, wherein the faces (11, 12) of the plate body (3) have stiffening ribs (14) projecting from the faces (11, 12) .

7. A structure according to one of the preceding claims, wherein the sleeves (5) are associated to respective extension pipes (9), housed in the sleeves (5) and projecting from one of or both opposite ends (16) of the sleeves (5).

8. A structure according to Claim 7, wherein each extension pipe (9) comprises an insertion portion (19), having a diameter such as to be inserted inside a sleeve (5); and a socket head portion (20), having a diameter greater than the insertion portion (19) and such as to axially abut against a front edge (18) of a sleeve (5) and project outside the sleeve (5) when the respective insertion portion (19) is housed in the sleeve (5).

9. A structure according to Claim 8, wherein the extension pipes (9) are provided with respective outer sealing rings (21), cooperating radially in fluid-tight manner with respective inner surfaces of the sleeves (5); and with respective inner sealing rings (22), arranged inside each extension pipe (9) and projecting radially inwards so as to cooperate radially, in use, with an outer lateral surface of a service pipe coupled to the extension pipe (9).

10. A structure according to any one of the preceding claims, comprising framework elements (7), in particular made of metal material, which project from the plate body (3) to be embedded, in use, in a construction material cast about the mask (2).

11. A structure according to Claim 10, comprising a pair of framework elements (7) arranged substantially about the sleeves (5) on opposite sides of the gasket (6) and supported by supports (27), which project from the plate body (3) and are spaced apart from one another along the peripheral edge (13) and shaped so as to maintain the framework elements (7) spaced from the gasket (6) and from the faces (11, 12) of the plate body (3), as well as from the sleeves (5).

12. A structure according to Claim 11, wherein the framework elements (7) are defined by respective bars or rods, for example in metal material, folded along the peripheral edge (13) of the plate body (3) to follow the profile of the peripheral edge (13).

13. A structure according to one of the preceding claims, comprising caps (8) shaped so as to close respective ends (16) of the sleeves (5), or respective ends (29) of extension pipes (9) associated to the sleeves (5).

14. Use of a structure (1) according to any one of the preceding claims for installing a pipe bundle, i.e. a bundle or battery of service pipes or cables, through a wall.

15. The use according to Claim 14, wherein the structure (1) is embedded in the wall under construction so as the sleeves define respective passages for service cables.

## Patentansprüche

1. Mehrkanalige Installationsstruktur (1) für Rohrbündel, d.h. mehrkanalige Installationsstruktur für Versorgungskabel und/oder -rohre durch eine Wand, aufweisend eine Maske (2) mit einem Plattenkörper (3), der mit einer Vielzahl von Durchgangsöffnungen (4) zwischen zwei gegenüberliegenden Flächen (11, 12) des Plattenkörpers (3) versehen ist und jeweiligen Muffen (5) zugeordnet ist, die von dem Plattenkörper (3) vorstehen und im Gebrauch jeweilige Kanäle für Versorgungskabel definieren; und eine Umfangsdichtung (6), die um den Plattenkörper (3) entlang eines Außenumfangsrands (13) des Plattenkörpers (3) angeordnet ist; **dadurch gekennzeichnet, dass** die Dichtung (6) in einem Sitz (23) untergebracht ist, der entlang des Umfangsrands (13) ausgebildet ist, und sich gegen eine Bodenfläche (24), die durch eine radial äußere Fläche des Umfangsrands (13) definiert ist, und seitlich gegen gegenüberliegende seitliche Rückhalteelemente (25) lehnt, die von dem Umfangsrand (13) auf gegenüberliegenden Seiten der Bodenfläche (24) nach außen vorstehen.

2. Struktur nach Anspruch 1, wobei die Muffen (5) von beiden gegenüberliegenden Flächen (11, 12) des Plattenkörpers (3) vorstehen.

3. Struktur nach Anspruch 1 oder 2, wobei die Maske (2) aus einem monolithischen Stück aus Polymermaterial besteht, das durch den Plattenkörper (3) und die Muffen (5) gebildet ist.

4. Struktur nach einem der vorhergehenden Ansprüche, wobei die Dichtung (6) ein schlaufenförmiges Band aus einem quellfähigen Material, beispielsweise einem Bitumenmaterial, aufweist, das sich durch Kontakt mit Wasser ausdehnt.

5. Struktur nach einem der vorhergehenden Ansprüche, wobei die Elemente (25) auf jeder Seite der Bodenfläche (24) entlang des Umfangsrands (13) voneinander beabstandet sind; und die Elemente (25), die auf einer Seite der Bodenfläche (24) positioniert sind, zumindest teilweise entlang des Umfangsrands (13) in Bezug auf die Elemente (25) auf der gegenüberliegenden Seite gestaffelt sind.

6. Struktur nach einem der vorhergehenden Ansprüche, wobei die Flächen (11, 12) des Plattenkörpers (3) Versteifungsrippen (14) aufweisen, die von den Flächen (11, 12) vorstehen.

7. Struktur nach einem der vorhergehenden Ansprüche, wobei die Muffen (5) jeweiligen Verlängerungsrohren (9) zugeordnet sind, die in den Muffen (5) untergebracht sind und von einem der oder beiden gegenüberliegenden Enden (16) der Muffen (5) vorstehen.

8. Struktur nach Anspruch 7, wobei jedes Verlängerungsrohr (9) einen Einführungsabschnitt (19) mit einem solchen Durchmesser, dass er in eine Muffe (5) eingeführt werden kann, und einen Stutzenkopfabschnitt (20) mit einem Durchmesser, der größer als der Einführungsabschnitt (19) und ein solcher ist, dass er axial an einem vorderen Rand (18) einer Muffe (5) anliegen und außerhalb der Muffe (5) vorstehen kann, wenn der jeweilige Einführungsabschnitt (19) in der Muffe (5) untergebracht ist.

9. Struktur nach Anspruch 8, wobei die Verlängerungsrohre (9) versehen sind mit jeweiligen äußeren Dichtungsringen (21), die radial fluiddicht mit jeweiligen Innenoberflächen der Muffen (5) zusammenwirken; und mit jeweiligen inneren Dichtungsringen (22), die so innerhalb jedes Verlängerungsrohrs (9) angeordnet sind und radial nach innen vorstehen, dass sie im Gebrauch radial mit einer äußeren seitlichen Oberfläche eines mit dem Verlängerungsrohr (9) gekoppelten Versorgungsrohrs zusammenwirken.

10. Struktur nach einem der vorhergehenden Ansprüche, aufweisend Rahmenelemente (7), insbesondere aus Metallmaterial, die von dem Plattenkörper (3) vorstehen, um im Gebrauch in ein um die Maske (2) gegossenes Baumaterial eingebettet zu sein.

11. Struktur nach Anspruch 10, aufweisend ein Paar Rahmenelemente (7), die im Wesentlichen um die Muffen (5) auf gegenüberliegenden Seiten der Dichtung (6) angeordnet sind und durch Stützen (27) gestützt werden, die von dem Plattenkörper (3) vorstehen und entlang des Umfangsrands (13) voneinander beabstandet und so geformt sind, dass sie die Rahmenelemente (7) von der Dichtung (6) und von den Flächen (11, 12) des Plattenkörpers (3) sowie von den Muffen (5) beabstandet halten.

12. Struktur nach Anspruch 11, wobei die Rahmenelemente (7) durch jeweilige Stäbe oder Stangen, beispielsweise in Metallmaterial, definiert sind, die entlang des Umfangsrands (13) des Plattenkörpers (3) gefaltet sind, um dem Profil des Umfangsrands (13) zu folgen.

13. Struktur nach einem der vorhergehenden Ansprüche, aufweisend Kappen (8), die so geformt sind, dass sie jeweilige Enden (16) der Muffen (5) oder jeweilige Enden (29) von Verlängerungsrohren (9), die den Muffen (5) zugeordnet sind, schließen.

14. Verwendung einer Struktur (1) nach einem der vorhergehenden Ansprüche zum Installieren eines Rohrbündels, d.h. eines Bündels oder einer Batterie von Versorgungsrohren oder Kabeln durch eine Wand.

15. Verwendung nach Anspruch 14, wobei die Struktur (1) in die im Bau befindliche Wand so eingebettet ist, dass die Muffen jeweilige Kanäle für Versorgungskabel definieren.

## Revendications

1. Structure d'installation à plusieurs passages (1) pour faisceaux de tuyaux, c'est-à-dire une structure d'installation à plusieurs passages pour câbles et/ou tuyaux de service à travers une paroi, comprenant un masque (2), ayant un corps de plaque (3) prévu avec une pluralité d'ouvertures débouchantes (4) entre deux faces opposées (11, 12) du corps de plaque (3) et associées aux manchons (5) respectifs qui font saillie du corps de plaque (3) et définissent, à l'usage, des passages respectifs pour les câbles de service ; et un joint périphérique (6) agencé autour du corps de plaque (3) le long d'un bord périphérique externe (13) du corps de plaque (3) ; **caractérisée en ce que** le joint (6) est logé dans un siège (23) formé le long du bord périphérique (13) et s'appuie contre une surface inférieure (24) définie par une surface radialement externe du bord périphérique (13) et latéralement contre des éléments de retenue latéraux (25) opposés, qui font saillie vers l'extérieur à partir du bord périphérique (13) sur les côtés opposés de la surface inférieure (24).

2. Structure selon la revendication 1, dans laquelle les manchons (5) font saillie des deux faces opposées (11, 12) du corps de plaque (3).

3. Structure selon la revendication 1 ou 2, dans laquelle le masque (2) se compose d'une pièce monolithique en matière polymère formée par le corps de plaque (3) et les manchons (5).

4. Structure selon l'une des revendications précédentes, dans laquelle le joint (6) comprend une bande en forme de boucle réalisée avec un matériau gonflable, par exemple un matériau bitumineux, qui se dilate au contact de l'eau.

5. Structure selon l'une des revendications précédentes, dans laquelle les éléments (25) de chaque côté de la surface inférieure (24) sont espacés les uns des autres le long du bord périphérique (13) ; et les éléments (25) positionnés d'un côté de la surface inférieure (24) sont au moins partiellement en quinconce le long du bord périphérique (13) par rapport aux éléments (25) sur le côté opposé.

6. Structure selon l'une des revendications précédentes, dans laquelle les faces (11, 12) du corps de plaque (3) ont des nervures de renforcement (14) faisant saillie des faces (11, 12).

7. Structure selon l'une des revendications précédentes, dans laquelle les manchons (5) sont associés aux tuyaux d'extension (9) respectifs, logés dans les manchons (5) et faisant saillie d'une ou des deux extrémités opposées (16) des manchons (5).

8. Structure selon la revendication 7, dans laquelle chaque tuyau d'extension (9) comprend une partie d'insertion (19) ayant un diamètre afin d'être insérée à l'intérieur d'un manchon (5) ; et une partie de tête de douille (20) ayant un diamètre supérieur à la partie d'insertion (19) et afin de venir axialement en butée contre un bord avant (18) d'un manchon (5) et faire saillie à l'extérieur du manchon (5) lorsque la partie d'insertion (19) respective est logée dans le manchon (5) .

9. Structure selon la revendication 8, dans laquelle les tuyaux d'extension (9) sont prévus avec des bagues d'étanchéité externes (21) respectives, coopérant radialement d'une manière étanche au fluide avec les surfaces internes respectives des manchons (5) ; et avec des bagues d'étanchéité internes (22) respectives agencées à l'intérieur de chaque tuyau d'extension (9) et faisant saillie radialement vers l'intérieur afin de coopérer radialement, à l'usage, avec une surface latérale externe d'un tuyau de service couplé au tuyau d'extension (9).

10. Structure selon l'une quelconque des revendications précédentes, comprenant des éléments d'armature (7), en particulier réalisés avec un matériau métallique, qui font saillie du corps de plaque (3) pour être encastrés, à l'usage, dans un matériau de construction coulé autour du masque (2).

11. Structure selon la revendication 10, comprenant une paire d'éléments d'armature (7) agencés sensiblement autour des manchons (5) sur les côtés opposés du joint (6) et supportés par des supports (27), qui font saillie du corps de plaque (3) et sont espacés les uns des autres le long du bord périphérique (13) et formés afin de maintenir les éléments d'armature (7) espacés du joint (6) et des faces (11, 12) du corps de plaque (3), ainsi que des manchons (5).

12. Structure selon la revendication 11, dans laquelle les éléments d'armature (7) sont définis par des barres ou tiges respectives, par exemple en matériau métallique, pliées le long du bord périphérique (13) du corps de plaque (3) pour suivre le profil du bord périphérique (13).

13. Structure selon l'une des revendications précédentes, comprenant des capuchons (8) formés afin de fermer les extrémités (16) respectives des manchons (5) ou les extrémités (29) respectives des tuyaux d'extension (9) associés aux manchons (5).

14. Utilisation d'une structure (1) selon l'une quelconque des revendications précédentes pour installer un faisceau de tuyaux, c'est-à-dire un faisceau ou batterie de tuyaux ou câbles de service, à travers une paroi.

15. Utilisation selon la revendication 14, dans laquelle la structure (1) est encastrée dans la paroi en construction de sorte que les manchons définissent les passages respectifs pour les câbles de service.
